# EUROPEAN PATENT SPECIFICATION

(11) **EP 4 258 081 B1**
(45) Date of publication and mention of the grant of the patent: **11.06.2025**
(21) Application number: 21901066.7
(22) Date of filing: 03.12.2021
(51) Int. Cl.: G06F 1/16, G09F 9/30, H04M 1/02

(54) **ELECTRONIC DEVICE INCLUDING FLEXIBLE DISPLAY**
ELEKTRONISCHE VORRICHTUNG MIT FLEXIBLER ANZEIGE
DISPOSITIF ÉLECTRONIQUE COMPRENANT UN ÉCRAN SOUPLE

(30) Priority: 04.12.2020 KR 20200168961
(43) Date of publication of application: 11.10.2023
(73) Proprietor: Samsung Electronics Co., Ltd., Suwon-si, Gyeonggi-do 16677 (KR)
(72) Inventor: CHOI, Sungdae, Suwon-si, Gyeonggi-do 16677 (KR); KIM, Jonghae, Suwon-si, Gyeonggi-do 16677 (KR); CHO, Joungmin, Suwon-si, Gyeonggi-do 16677 (KR); KIM, Kwangtai, Suwon-si, Gyeonggi-do 16677 (KR); YEOM, Donghyun, Suwon-si, Gyeonggi-do 16677 (KR)
(74) Representative: Gulde & Partner
(86) International application number: PCT/KR2021/018225
(87) International publication number: WO 2022/119378

(56) References cited:
- WO-A1-2019/041830
- CN-A- 110 047 385
- CN-A- 110 379 309
- CN-B- 107 424 518
- KR-A- 20140 048 007
- KR-A- 20180 043 433
- KR-A- 20200 007 366
- US-A1- 2021 012 687
- US-B1- 10 747 269

## Description

### [Technical Field]

Various embodiments of the disclosure relate to an electronic device including a flexible display.

### [Background Art]

Along with an increase in the demands for mobile communication and the integration level of electronic devices, the portability of electronic devices such as mobile communication terminals may increase, and various functions such as multimedia functions may be used with improved convenience. For example, as displays integrated with a touch screen function replace traditional mechanical (button) keypads, electronic devices may be miniaturized, while retaining an input device function. For example, the portability of an electronic device may be improved by removing a mechanical keypad from it. In another embodiment, if a display is extended by an area from which a mechanical keypad is removed, an electronic device including the touch screen function may provide a larger screen than an electronic device including a mechanical keypad, for the same size and weight.

A user may use web surfing or a multimedia function more conveniently with an electronic device that outputs a large screen. Although a larger display may be mounted on an electronic device to output a large screen, there may be limitations in increasing the size of the display in consideration of the portability of the electronic device. In an embodiment, a display using an organic light emitting diode may secure the portability of an electronic device, while providing a large screen. For example, the display using an organic light emitting diode (or an electronic device equipped therewith) may perform a stable operation even if it is made very thin. Accordingly, the display may be mounted in a foldable, bendable, or rollable form in the electronic device. Rollable electronic devices may include a rolling-type electronic device in which a display is rolled along a guide member such as a roller, and a sliding-type electronic device including a slidable display. An electronic device outputting a larger screen may be provided to a user by mounting a display using an organic light emitting diode in a foldable, slidable, or rollable form in the electronic device.

WO 2019/041830 A1 describes a flexible display panel which includes a display substrate, a plurality of pixel units arranged in an array on the display substrate, and a strain sensor on the display substrate. The strain sensor is arranged corresponding to a region comprising at least one of the plurality of pixel units. The strain sensor is further configured to detect deformation in the region comprising at least one of the plurality of pixel units and to generate a detection signal.

KR 2018 0043433 A describes a rollable display panel which includes a display region in which an image is displayed, a non-display region surrounding the display region, and a resistance sensor which is arranged in the non-display region and has a resistance value which is different according to a curvature in a rolling process.

US 10 747 269 B1 describes a flexible display device which is configured to include a body, a moving plate, a flexible display, and a driving module. The driving module is configured to include a bracket, a sliding plate including a rack, a driving motor, and a driving gear. The driving module is coupled to a body and a moving plate after assembling the driving module so that it is possible to prevent a sliding plate which slidably moves together with a flexible display after assembling the flexible display device from being loosen and also prevent the idle operation of the driving gear.

CN 107 424 518 B describes a flexible display device which comprises a shell, a first guiding track, a first sliding block and a flexible display screen; accommodating space is formed in the shell, and an opening of the accommodating space is formed in one end of the shell in the first direction; the first guiding track is fixed in the accommodating pace and extends in the first direction; at least two elastic clamping buckles which are sequentially arranged in the first direction are arranged on the first guiding track; the first sliding block is slidably mounted on the first guiding track; clamping teeth for being clamped with the elastic buckles on the first guiding track are arranged on the first guiding track; and at least part of the flexible display screen is accommodated in the accommodating space and connected with the first sliding block. According to the flexible display device, the display operating process is simple and convenient, stability is high, reliability is good, meanwhile, damage to the flexible display screen is not easy to occur, and the service life is long.

### [Detailed Description of the Invention]

### [Technical Problem]

In an electronic device including a rollable display (hereinafter, referred to as a 'rollable electronic device'), a touch recognizable range as well as a user interface (UI) or current consumption may be changed according to an extended or contracted length (or area or area) of a display visible to a user. The rollable electronic device may measure the extended or contracted length of the display and thus output a screen corresponding to the extended or contracted display. Current consumption may be reduced by setting a display invisible to the user as an unused part and powering off this part. Therefore, it may be very important to accurately estimate the length (or movement distance) of the display according to extension or contraction of the display in the rollable electronic device.

According to a certain embodiment, when the display is automatically extended by driving a motor, the position of the display may be estimated based on the number of revolutions of the motor. According to another embodiment, a method of estimating a relative position to which a display is moved based on the position of a plate (e.g., a multi-bar plate) provided at the bottom of the display when the display is extended or contracted may also be applied. In addition, according to an embodiment, a method of measuring the distance between a basic position of a display and a position in an extended or contracted state by calculating the travel time of light using an optical sensor (e.g., a time of flight (ToF) sensor) may also be applied

Among the above-described embodiments, the method using the number of revolutions of a motor may not be viable in a device that drives a display to be extended or contracted without a motor. The actual number of revolutions of the motor may not necessarily match an extended or contracted length of the display in the rollable electronic device. Moreover, if there is an error between the actual number of revolutions of the motor and the actual extended or contracted length of the rollable electronic device, and the error is not corrected, the difference between the measured number of revolutions and the actual position of the display may be gradually accumulated, resulting in a larger error. Among the above-described embodiments, in the case of the method of estimating a relative position to which a display is moved based on the position of a plate provided at the bottom of the display or in the case of using a ToF sensor, a 'mover' (a magnet moving along an extending display, a pipe structure for measurement with a TOF sensor, or the like) corresponding to an extended linear length of the display may be included. Because this is a method of measuring a variation of the 'mover', the size of the 'mover' may increase with the extended length of the display.

According to various embodiments of the disclosure, it is intended to provide a structure capable of measuring an extended or contracted length of a display in a rollable electronic device.

According to various embodiments of the disclosure, it is intended to provide a simple structure that measures an extended or contracted length of a display using the display itself without a separate 'mover' for measuring the extended or contracted length of the display.

### [Technical Solution]

According to an embodiment of the disclosure, as covered by appended independent claim 1, an electronic device including a flexible display comprises: a housing including a first surface, a second surface facing in a direction opposite to the first surface, a first side surface surrounding at least part of a space between the first surface and the second surface, and a second side surface facing in a direction opposite to the first side surface, wherein a part of the housing is configured to perform a slide-in operation and a slide-out operation with respect to the housing, wherein the housing is configured such that, when the part of the housing slides, a distance between the first side surface and the second side surface varies; and a flexible display including a first portion visible to an outside through at least one surface of the housing and a second portion extending from the first portion, wherein as at least part of the second portion is visible to the outside through the at least one surface of the housing based on thepart of the housing performing the slide-out operation, the first portion is extendable. The second portion of the flexible display includes a dummy area invisible to the outside independent on the housing performing a slide-in operation or a slide-out operation, in which a strain gauge is wired as a resistance measurement sensor, and a structure to change resistance based on a sliding movement of the part of the housing is included in the dummy area.

According to an embodiment, the strain gauge includes an integrated wiring structure.

According to an embodiment, the strain gauge is wired in a zigzag shape in the dummy area.

According to an embodiment, the strain gauge is formed to have asymmetric wiring densities on one side and the other side of the dummy area.

According to an embodiment, the strain gauge is connected to a circuit unit disposed in a second dummy area included in the flexible display.

According to an embodiment, the electronic device further comprises a support member or a substrate disposed in a space of the housing, wherein the structure protrudes from the support member or the substrate toward the dummy area.

According to an embodiment, the electronic device further comprises: a multi-joint hinge structure configured to support the flexible display; and a guide member configured to guide the flexible display to move in a clockwise or counterclockwise direction while maintaining a specific curvature.

According to an embodiment, the dummy area is formed to extend to a position corresponding to the guide member and be bendable.

According to an embodiment, the structure has a bump shape.

According to an embodiment, the structure is configured to deform the dummy area in a direction perpendicular to a movement direction of the dummy area by pressing at least part of the multi-joint hinge structure in an opening operation or closing operation of the electronic device.

According to an embodiment, the structure has a rail shape.

According to an embodiment, the structure includes: a rod-shaped guide portion configured to linearly guide at least part of the dummy area in one direction; a rotation guide portion configured to guide the at least part of the dummy area to move in the clockwise or counterclockwise direction while maintaining a specific curvature; and a fastening end portion fixed to one end of the dummy area.

According to an embodiment, a diameter of the rotation guide portion is less than a diameter of the guide member.

According to an embodiment, a radius of curvature of the dummy area at a position corresponding to a center of the rotation guide portion is less than a radius of curvature of the display at a position corresponding to a center of the guide member.

### [Advantageous Effects]

According to various embodiments of the disclosure, because an extended or contracted length of a display is measured using a dummy area of the display, an insufficient mounting space in an electronic device may be effectively utilized.

According to various embodiments of the disclosure, the use of a strain gauge sensor which is wired in a dummy area of a display enables measurement of an extended or contracted length of the display without increasing the size of an electronic device.

### [Brief Description of Drawings]

FIG. 1 is a block diagram illustrating an electronic device in a network environment according to various embodiments of the disclosure.
FIG. 2 is a diagram illustrating an electronic device according to various embodiments of the disclosure in a state in which a flexible display is partially accommodated in a second structure.
FIG. 3 is a diagram illustrating an electronic device according to various embodiments of the disclosure in a state in which a flexible display is mostly exposed to the outside of a second structure.
FIG. 4 is an exploded perspective view illustrating an electronic device according to various embodiments of the disclosure.
FIG. 5 is a diagram illustrating behaviors of a display in a slide-in operation and a slide-out operation of a first structure according to various embodiments of the disclosure.
FIG. 6a is a conceptual diagram illustrating a state in which a display is partially lifted according to a certain embodiment.
FIG. 6b is a conceptual diagram illustrating a display including a dummy area according to various embodiments of the disclosure.
FIG. 7 is a diagram illustrating a display with a strain gauge wired therein according to various embodiments of the disclosure.
FIG. 8 is a diagram illustrating a dummy area of the display illustrated in FIG. 7.
FIG. 9a is a diagram illustrating an internal cross-section of an electronic device in a slide-in state according to an embodiment of the disclosure.
FIG. 9b is a diagram illustrating an internal cross-section of an electronic device in a slide-out state according to an embodiment of the disclosure.
FIG. 10a is a diagram illustrating an internal cross-section of an electronic device in a slide-in state according to another embodiment of the disclosure.
FIG. 10b is a diagram illustrating an internal cross-section of an electronic device in a slide-out state according to another embodiment of the disclosure.
FIG. 11a is a diagram illustrating an internal cross-section of an electronic device in a slide-in state according to another embodiment of the disclosure.
FIG. 11b is a diagram illustrating an internal cross-section of an electronic device in a slide-out state according to another embodiment of the disclosure.

### [Mode for Carrying out the Invention]

Various embodiments of the disclosure may be described below with reference to the attached drawings.

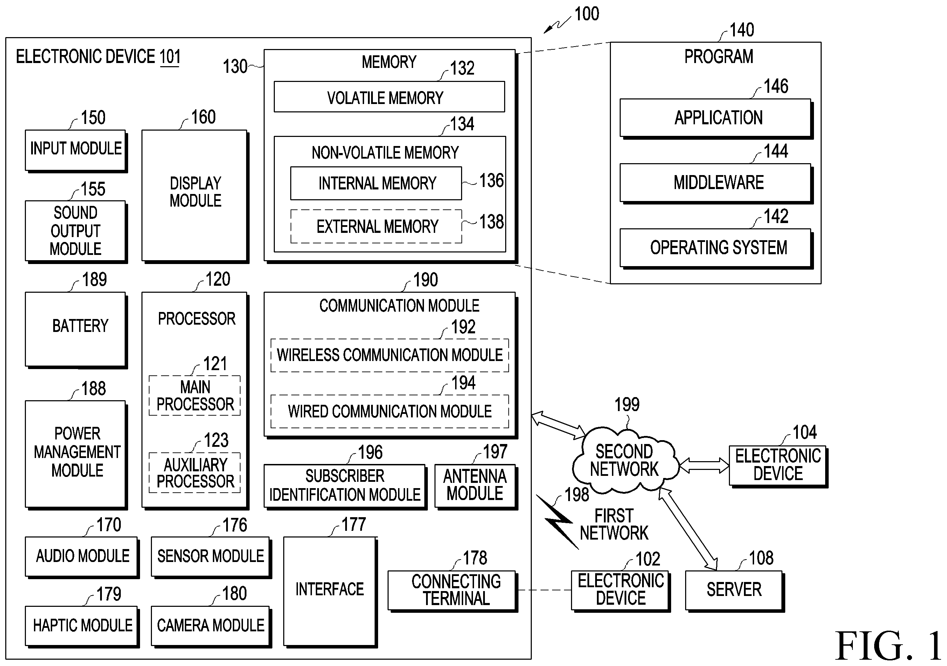

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In a certain embodiment, at least one of the components (e.g., the connecting terminal 178) may be omitted from the electronic device 101, or one or more other components may be added in the electronic device 101. In a certain embodiment, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

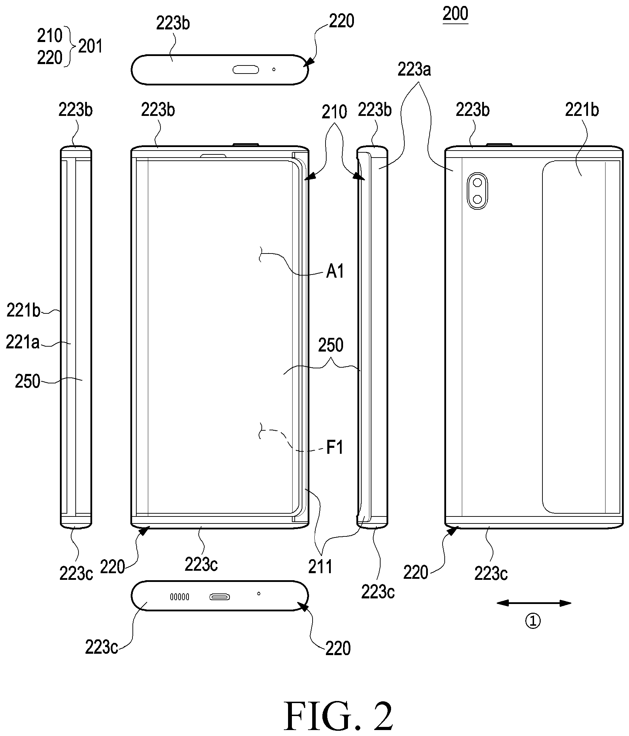

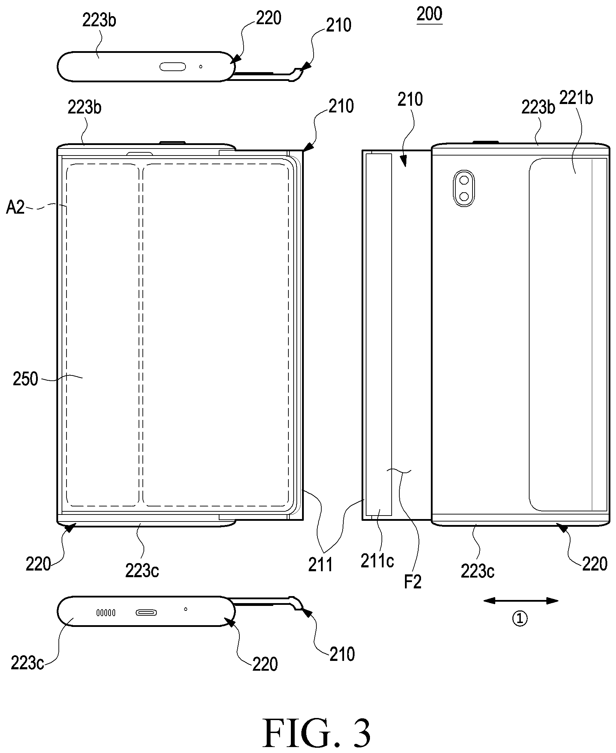

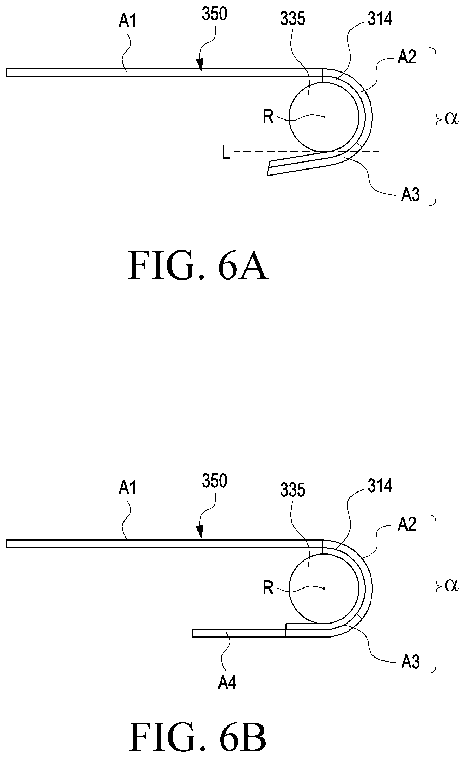

FIG. 2 is a diagram illustrating an electronic device 200 according to various embodiments of the disclosure, in which a flexible display 250 (e.g., an alpha area α; see FIG. 6a) is accommodated in a second structure 220. FIG. 3 is a diagram illustrating the electronic device according to various embodiments of the disclosure, in which the flexible display 250 is mostly exposed to the outside of the second structure 220.

The electronic device 200 of FIGS. 2 and 3, which is an example of the electronic device 101 illustrated in FIG. 1, may be a rollable electronic device. The rollable electronic device may include a rolling-type electronic device in which a display is rolled along a guide member such as a roller, and a sliding-type electronic device in which a display is slidable. It should be noted that the following embodiments will be described mainly in the context of a sliding-type electronic device, and the following description is applicable to other types of rollable electronic devices (e.g., a rolling-type electronic device) without a separate description.

The state illustrated in FIG. 2 may be defined as a first structure 210 being closed with respect to the second structure 220, and the state illustrated in FIG. 3 may be defined as the first structure 210 being opened with respect to the second structure 220. According to an embodiment, a "closed state" or an "opened state" may be defined as a state in which an electronic device is closed or opened. According to an embodiment, the closed state of the electronic device 200 may be defined as a state in which a slidable housing 201 in the electronic device 200 has a minimum width, and the opened state of the electronic device 200 may be defined as a state in which the slidable housing 201 has a maximum width. According to another embodiment, the closed state of the electronic device 200 may be defined as a state in which the area of a part of the display 250 exposed to the outside is minimized, and the opened state of the electronic device may be defined as a state in which the area of the display 250 exposed to the outside is maximized. According to an embodiment, the electronic device 200 may further include an intermediate state between the "closed state" and the "opened state". For example, the intermediate state may be understood as any state before switching is completed in a switching operation from the "closed state" to the "opened state" or from the "opened state" to the "closed state".

Referring to FIGS. 2 and 3 together, the electronic device 200 may include the first structure 210 and the second structure 220 movably disposed on the first structure 210. In a certain embodiment, the first structure 210 may be interpreted as a structure slidably disposed on the second structure 220 in the electronic device 200. According to an embodiment, the first structure 210 may be disposed to reciprocate by a predetermined distance in a direction illustrated with respect to the second structure 220, for example, in a direction indicated by an arrow ①.

According to various embodiments, the first structure 210 may be referred to as, for example, a first housing structure, a slide part, or a slide housing and disposed reciprocably on the second structure 220. In an embodiment, the second structure 220 may be referred to as, for example, a second housing structure, a main part, or a main housing, and accommodate various electric and electronic components such as a main circuit board or a battery. A part (e.g., a first area A1) of the display 250 may be seated on the first structure 210. According to an embodiment, as the first structure 210 moves (e.g., slides) relative to the second structure 220, another part (e.g., a second area A2) of the display 250 may be accommodated into the second structure 220 (e.g., a slide-in operation) or exposed to the outside of the second structure 220 (e.g., a slide-out operation). The part (e.g., the first area A1) of the display 250 may be a basic use area in a slide-in state of the display 250, and the other part (e.g., the second area A2) of the display 250 may be an extension area in a slide-out state.

In the embodiment illustrated in FIGS. 2 and 3, the basic use area (e.g., the first area A1) is illustrated as seated on the first structure 210 in the slide-in state of the display 250. According to the embodiment illustrated in FIG. 3, the basic use area (e.g., the first area A1) is illustrated as formed on a right side toward which the display 250 is extended, and the extension area (e.g., the second area A2) is illustrated as formed on a left side of the display 250, in the slide-out state of the display 250. However, the disclosure is not necessarily limited thereto, and unlike FIG. 3, the basic use area (e.g., the first area A1) may be formed on the left side opposite to the direction in which the display 250 is extended, and the extension area (e.g., the second area A2) may be formed on the right side of the display 250, in the slide-out state of the display 250.

According to various embodiments, the first structure 210 includes a first plate 211 (e.g., a slide plate), and include a first surface F1 formed to include at least part of the first plate 211 and a second surface F2 facing in an opposite direction to the first surface F1. According to an embodiment, the second structure 220 may include a second plate 221a (e.g., a rear case), a first sidewall 223a extending from the second plate 221a, a second sidewall 223b extending from the first sidewall 223a and the second plate 221a, a third sidewall 223c extending from the first sidewall 223a and the second plate 221a and parallel to the second sidewall 223b, and/or a rear plate 221b (e.g., a rear window). In a certain embodiment, the second sidewall 223b and the third sidewall 223c may be formed perpendicular to the first sidewall 223a. According to an embodiment, the second plate 221a, the first sidewall 223a, the second sidewall 223b, and the third sidewall 223c may be opened from one side (e.g., a front surface) to accommodate (or surround) at least part of the first structure 210. For example, the first structure 210 may be coupled with the second structure 220, while being at least partially surrounded, and slide in a direction parallel to the first surface F1 (e.g., the front surface) or the second surface F2 (e.g., a rear surface), for example, in the direction indicated by the arrow ① under the guidance of the second structure 220.

According to various embodiments, the second sidewall 223b or the third sidewall 223c may be omitted. According to an embodiment, the second plate 221a, the first sidewall 223a, the second sidewall 223b, and/or the third sidewall 223c may be formed as separate structures and then combined with or assembled to each other. The rear plate 221b may be coupled to cover at least part of the second plate 221a. In another embodiment, the rear plate 221b may be substantially integrally formed with the second plate 221a. According to an embodiment, the second plate 221a or the rear plate 221b may cover at least part of the flexible display 250. For example, the flexible display 250 may be at least partially accommodated inside the second structure 220, and the second plate 221a or the rear plate 221b may cover the part of the display 250 accommodated inside the second structure 220.

According to various embodiments, the first structure 210 may move to the opened state and the closed state with respect to the second structure 220 in a first direction (e.g., the direction ①). The first structure 210 may move to a first distance from the first sidewall 223a in the closed state and to a second distance greater than the first distance from the first sidewall 223a in the opened state. In a certain embodiment, the first structure 210 may be located to surround part of the first sidewall 223a in the closed state.

According to various embodiments, the first sidewall 223a may move integrally with the first structure 210 unlike the above-described embodiments. The second structure 220 may include a fourth sidewall (not shown) located in an opposite direction to the first sidewall 223a, and with the fourth sidewall (not shown) fixed, the first sidewall 223a may recede from the fourth sidewall (not shown) along with the movement of the first structure 210. Besides, extension of the slidable housing according to sliding movement of the first structure 210 may vary according to embodiments.

According to various embodiments, the electronic device 200 includes the display 250 and may include a key input device, a connector hole, an audio module, or a camera module. Although not illustrated, the electronic device 200 may further include an indicator (e.g., an LED device) or various sensor modules. The display 250 may be coupled with or disposed adjacent to a touch sensing circuit, a pressure sensor capable of measuring the strength (pressure) of a touch, and/or a digitizer that detects a magnetic field-type stylus pen.

According to various embodiments, the display 250 includes the first area A1 and the second area A2. In an embodiment, the first area A1 is extended substantially across at least part of the first plate 211 and disposed on the first surface F1. According to the sliding movement of the first structure 210, the second area A2 is inserted or accommodated into the second structure 220 (e.g., the main housing) or exposed to the outside of the second structure 220. As described later, the second area A2 may move substantially under the guidance of a guide member (e.g., a roller) mounted in the second structure 220 to be accommodated into the second structure 220 or exposed to the outside of the second structure 220. For example, while the first structure 210 slides, part of the second area A2 may be deformed into a curved shape at a position corresponding to the guide member. According to various embodiments, when the first structure 210 moves from the closed state to the opened state, the second area A2 may form a substantially flat surface together with the first area A1, while being gradually exposed to the outside of the second structure 220, when viewed from above the first plate 211 (e.g., the slide plate). In a certain embodiment, the second area A2 is at least partially accommodated inside the second structure 220, and part of the second area A2 is exposed to the outside even in the state illustrated in FIG. 2 (e.g., the closed state). In a certain embodiment, the exposed part of the second area A2 may be located on the guide member (not shown) and kept in the curved shape at the position corresponding to the guide member (not shown), regardless of the closed state or the opened state. Although the guide member is illustrated as disposed opposite to the direction in which the display of the electronic device 200 is extended in the embodiment illustrated in FIGS. 2 and 3, the disclosure is not necessarily limited thereto. An embodiment in which the guide member is disposed in the direction in which the display of the electronic device 200 is extended is also applicable.

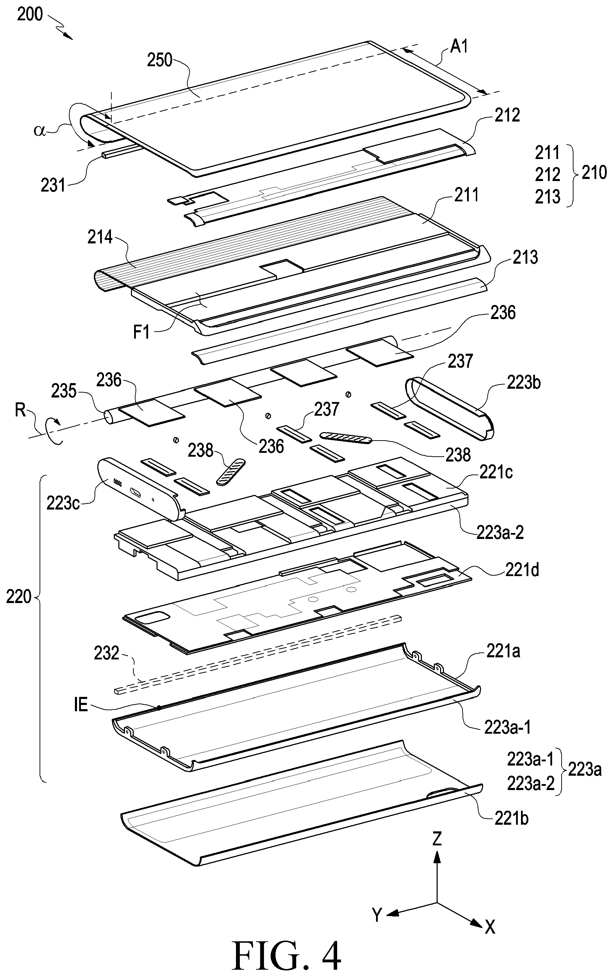

FIG. 4 is an exploded perspective view illustrating the electronic device 200 according to various embodiments of the disclosure.

FIG. 4 and its following drawings illustrate a spatial coordinate system defined by X, Y, and Z axes orthogonal to each other. The X axis may represent a width direction of an electronic device, the Y axis may represent a length direction of the electronic device, and the Z axis may represent a height (or thickness) direction of the electronic device. In the following description, a 'first direction' may mean a direction parallel to the Z axis.

Referring to FIG. 4, the electronic device 200 includes the display 250 (e.g., a flexible display) and may include the first structure 210, the second structure 220 (e.g., the main housing), a guide member (e.g., a roller 235), a support sheet 236, and/or a multi-joint hinge structure 214. Part (e.g., the alpha area α to be described below with reference to FIG. 6a) of the display 250 may be accommodated into the second structure 220 under the guidance of the roller 235.

According to various embodiments, the first structure 210 may include the first plate 211 (e.g., the slide plate), a first bracket 212, and/or a second bracket 213 mounted on the first plate 211. The first structure 210, for example, the first plate 211, the first bracket 212, and/or the second bracket 213 may be formed of a metal material and/or a non-metal (e.g., polymer) material. The first plate 211 may be mounted in the second structure 220 (e.g., the main housing) and linearly reciprocate in a direction (e.g., in the direction indicated by the arrow ① in FIG. 1) under the guidance of the second structure 220. In an embodiment, the first bracket 212 may be coupled with the first plate 211 to form the first surface F1 of the first structure 210 together with the first plate 211. The first area A1 of the display 250 may be substantially mounted on the first surface F1 and maintained in a flat shape. The second bracket 213 may be coupled with the first plate 211 to form the second surface F2 of the first structure 210 together with the first plate 211. According to an embodiment, the first bracket 212 and/or the second bracket 213 may be integrally formed with the first plate 211. This may be appropriately designed in consideration of the assembly structure or manufacturing process of a manufactured product. The first structure 210 or the first plate 211 may be coupled with the second structure 220 and slide with respect to the second structure 220.

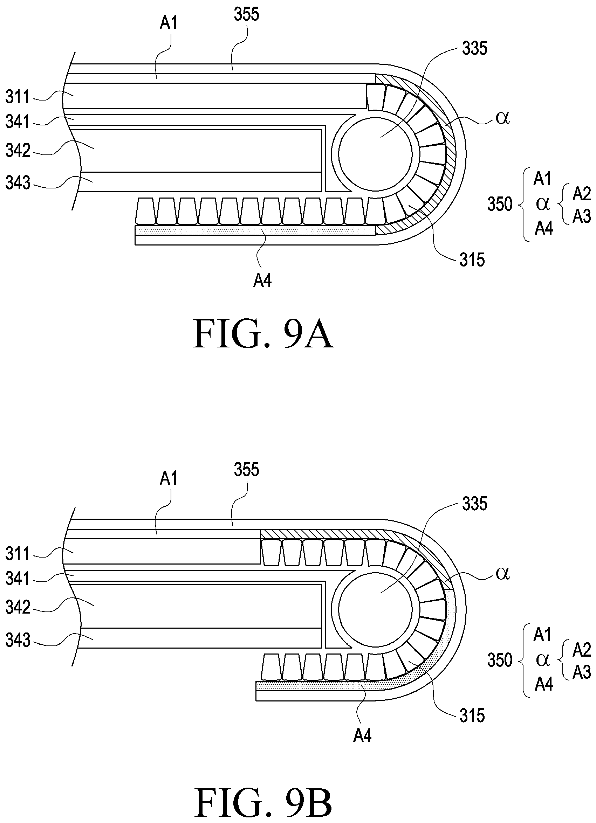

According to various embodiments, the multi-joint hinge structure 214 may include a plurality of bars or rods 315 (see FIG. 9a) and be connected to one end of the first structure 210. For example, as the first structure 210 slides, the multi-joint hinge structure 214 may move with respect to the second structure 220, and be substantially accommodated into the second structure 220 in the closed state (e.g., the state illustrated in FIG. 2). In a certain embodiment, part of the multi-joint hinge structure 214 may not be accommodated into the second structure 220 even in the closed state. For example, even in the closed state, part of the multi-joint hinge structure 214 may be located to correspond to the roller 235 outside the second structure 220. The plurality of rods 315 may extend in a straight line, be disposed parallel to a rotation axis R of the roller 235, and be arranged along a direction perpendicular to the rotation axis R, for example, a direction in which the first structure 210 slides.

Accordingly, as the first structure 210 slides, the plurality of rods 315 (see FIG. 9a) may be arranged in a curved shape or a flat shape. For example, as the first structure 210 slides, the multi-joint hinge structure 214 may form a curved surface at a part facing the roller 235 and a flat surface at a part that does not face the roller 235. In an embodiment, part (e.g., the alpha area α described later with reference to FIG. 6a) of the display 250 may be mounted on or supported by the multi-joint hinge structure 214, and exposed to the outside of the second structure 220 together with the first area A1 in the opened state (e.g., the state illustrated in FIG. 2). In a state in which the second area (e.g., the second area A2 of FIG. 2) is exposed to the outside of the second structure 220, the multi-joint hinge structure 214 may substantially form a flat surface, thereby supporting or maintaining the second area (e.g., the second area A2 of FIG. 2) in a flat state.

According to various embodiments, the second structure 220 (e.g., the main housing) may include the second plate 221a (e.g., the rear case), a printed circuit board (not shown), the rear plate 221b, and a third plate 221c (e.g., a front case), and/or a support member 221d. The second plate 221a, for example, the rear case may be disposed to face in an opposite direction to the first surface F1 of the first plate 211, and substantially provide the outer appearance of the second structure 220 or the electronic device 200. In an embodiment, the second structure 220 may include the first sidewall 223a extending from the second plate 221a, the second sidewall 223b extending from the second plate 221a and substantially perpendicular to the first sidewall 223a, and/or third sidewall 223c extending from the second sidewall 223b and the second plate 221a, substantially perpendicular to the first sidewall 223a, and parallel to the second sidewall 223b. Although the second sidewall 223b and the third sidewall 223c are manufactured as separate parts from the second plate 221a and mounted or assembled to the second plate 221a in the illustrated embodiment, they may be integrally formed with the second plate 221a. The second structure 220 may accommodate an antenna for near field communication, an antenna for wireless charging, or an antenna for magnetic secure transmission (MST) in a space that does not overlap with the multi-joint hinge structure 214.

According to various embodiments, the rear plate 221b may be coupled with an outer surface of the second plate 221a, and manufactured integrally with the second plate 221a according to an embodiment. In an embodiment, the second plate 221a may be made of a metal or polymer material, and the rear plate 221b may be made of a material such as a metal, glass, a synthetic resin, or ceramic to provide a decorative effect to the exterior of the electronic device 200. According to an embodiment, the second plate 221a and/or the rear plate 221b may be made of a material that transmits light at least partially (e.g., an auxiliary display area). For example, in a state in which part (e.g., the second area A2) of the display 250 is accommodated inside the second structure 220, the electronic device 200 may output visual information using a partial area of the display 250 accommodated inside the second structure 220. The auxiliary display area may provide the visual information output from the area accommodated inside the second structure 220 to the outside of the second structure 220.

According to various embodiments, the third plate 221c may be made of a metal or polymer material, and coupled with the second plate 221a (e.g., the rear case), the first sidewall 223a, the second sidewall 223b, and/or the third sidewall 223c to form an inner space of the second structure 220. According to an embodiment, the third plate 221c may be referred to as a "front case", and the first structure 210, for example, the first plate 211 may slide while substantially facing the third plate 221c. In a certain embodiment, the first sidewall 223a may be formed by a combination of a first sidewall portion 223a-1 extending from the second plate 221a and a second sidewall portion 223a-2 formed at an edge of the third plate 221c. In another embodiment, the first sidewall portion 223a-1 may be coupled to surround an edge of the third plate 221c, for example, the second sidewall portion 223a-2. In this case, the first sidewall portion 223a-1 itself may form the first sidewall 223a.

According to various embodiments, the support member 221d may be disposed in a space between the second plate 221a and the third plate 221c and have the shape of a flat plate made of a metal or polymer. The support member 221d may provide an electromagnetic shielding structure in the inner space of the second structure 220 or improve the mechanical rigidity of the second structure 220. In an embodiment, when accommodated inside the second structure 220, the multi-joint hinge structure 214 and/or a partial area (e.g., the second area A2) of the display 250 may be located in a space between the second plate 221a and the support member 221d.

According to various embodiments, the printed circuit board (not shown) may be disposed in a space between the third plate 221c and the support member 221d. For example, the printed circuit board may be accommodated in a space separated by the support member 221d from the space in which the multi-joint hinge structure 214 and/or the partial area of the display 250 is accommodated inside the second structure 220. A processor, memory, and/or an interface may be mounted on the printed circuit board. The processor may include, for example, one or more of a CPU, an AP, a GPU, an image signal processor, a sensor hub processor, or a CP.

The memory may include, for example, volatile memory or non-volatile memory.

The interface may include, for example, an HDMI, a USB interface, an SD card interface, and/or an audio interface. The interface may electrically or physically connect the electronic device 200 to an external electronic device and include a USB connector, an SD card/MMC connector, or an audio connector.

According to various embodiments, the display 250, which is a flexible display based on an organic light emitting diode, is at least partially deformed into a curved shape while being kept in a flat shape as a whole. In an embodiment, the first area A1 of the display 250 is mounted on or attached to the first surface F1 of the first structure 210 and maintained in a substantially flat shape. The second area A2 is extended from the first area A1 and supported by or attached to the multi-joint hinge structure 214. For example, the second area A2 is extended along the sliding direction of the first structure 210, accommodated into the second structure 220 together with the multi-joint hinge structure 214, and at least partially deformed into a curved shape according to deformation of the multi-joint hinge structure 214.

According to various embodiments, as the first structure 210 slides on the second structure 220, the area of the display 250 exposed to the outside varies. The electronic device 200 (e.g., the processor) may change an area of the display 250 that is activated based on the area of the display 250 exposed to the outside. For example, the electronic device 200 may activate the area exposed to the outside of the second structure 220 out of the entire area of the display 250 in the opened state or at an intermediate position between the closed state and the opened state. In the closed state, the electronic device 200 may activate the first area A1 of the display 250 and deactivate the second area A2. In the closed state, if there is no user input for a certain period of time (e.g., 30 seconds or 2 minutes), the electronic device 200 may deactivate the entire area of the display 250. In a certain embodiment, in a state in which the entire area of the display 250 is deactivated, the electronic device 200 may provide visual information through the auxiliary display area (e.g., part of the second plate 221a and/or the rear plate 221b, which is manufactured of a light transmitting material) by activating a partial area of the display 250, as needed (e.g., a notification based on user settings or a notification of missed calls/message arrival).

According to various embodiments, substantially the entire area (e.g., the first area A1 and the second area A2) of the display 250 may be exposed to the outside, and the first area A1 and the second area A2 may be disposed to form a flat surface, in the opened state (e.g., the state illustrated in FIG. 2). In an embodiment, part (e.g., one end) of the second area A2 may be located to correspond to the roller 235, and maintained in a curved shape, even in the opened state. For example, in various embodiments of the disclosure, even when it is said that "the second area A2 is disposed to form a flat surface in the opened state", part of the second area A2 may be maintained in the curved shape. Similarly, even though it is said that "the multi-joint hinge structure 214 and/or the second area A2 are accommodated inside the second structure 220 in the closed state", the multi-joint hinge structure 214 and/or part of the second area A2 may be located outside the second structure 220.

According to various embodiments, the guide member, for example, the roller 235 may be rotatably mounted in the second structure at a position adjacent to one edge of the second structure 220 (e.g., the second plate 221a). For example, the roller 235 may be disposed adjacent to an edge (e.g., a part indicated by reference numeral 'IE') of the second plate 221a parallel to the first sidewall 223a. Although a reference numeral is not given in the drawings, another sidewall may extend from the edge of the second plate 221a adjacent to the roller 235, and the sidewall adjacent to the roller 235 may be substantially parallel to the first sidewall 223a. As described above, the sidewall of the second structure 220 adjacent to the roller 235 may be made of a light transmitting material, and part of the second area A2 may provide visual information through part of the second structure 220, while being accommodated in the second structure 220.

According to various embodiments, one end of the roller 235 may be rotatably coupled with the second sidewall 223b, and the other end of the roller 235 may be rotatably coupled with the third sidewall 223c. For example, the roller 235 may be mounted in the second structure 220 and rotate around the rotation axis R perpendicular to the sliding direction (e.g., the direction indicated by the arrow ① in FIG. 1 or FIG. 2) of the first structure 210. The rotation axis R may be disposed substantially parallel to the first side wall 223a and located far from the first side wall 223a, for example, at one edge of the second plate 221a. In an embodiment, a spacing between an outer circumferential surface of the roller 235 and an inner surface of the edge of the second plate 221a may form an inlet through which the multi-joint hinge structure 214 or the display 250 enters the second structure 220.

According to various embodiments, when the display 250 is deformed into a curved shape, the roller 235 may maintain a radius of curvature of the display 250 at a specific level, thereby suppressing excessive deformation of the display 250. The "excessive deformation" may mean that the display 250 is deformed to have so small a radius of curvature as to damage pixels or signal lines included in the display 250. For example, the display 250 may be moved or deformed under the guidance of the roller 235 and protected from damage caused by excessive deformation. In a certain embodiment, the roller 235 may rotate while the multi-joint hinge structure 214 or the display 250 is being inserted into or extracted from the second structure 220. For example, the multi-joint hinge structure 214 (or the display 250) may enable smooth insertion/extraction of the second structure 220 by suppressing friction between the multi-joint hinge structure 214 (or the display 250) and the second structure 220.

According to various embodiments, the support sheet 236 may be made of a material having flexibility and a certain degree of elasticity, for example, a material including an elastic material such as silicone or rubber, and mounted on or attached to the roller 235 to be selectively wound around the roller 235 as the roller 235 rotates. In the illustrated embodiment, a plurality of (e.g., four) support sheets 236 may be arranged along the direction of the rotation axis R of the roller 235. For example, the plurality of support sheets 236 may be mounted on the roller 235, each spaced apart from an adjacent support sheet by a specific distance, and extend in a direction perpendicular to the rotation axis R. In another embodiment, one support sheet may be mounted on or attached to the roller 235. For example, one support sheet may have a size and shape corresponding to an area in which the support sheets 236 are disposed and an area between the support sheets 236 in FIG. 3. As such, the number, size, or shape of support sheets 236 may be appropriately changed depending on an actual manufactured product. In a certain embodiment, as the roller 235 rotates, the support sheet 236 may be rolled around the outer circumferential surface of the roller 235 or unwound from the roller 235 to form a flat shape between the display 250 and the third plate 221c. In another embodiment, the support sheet 236 may be referred to as a "support belt", "auxiliary belt", "support film", or "auxiliary film".

According to various embodiments, the electronic device 200 may include at least one elastic member 231 and 233 made of a low-density elastic material such as sponge or a brush. For example, the electronic device 200 may include a first elastic member 231 mounted on one end of the display 250 and, according to an embodiment, further include a second elastic member 233 mounted on an inner surface of an edge of the second plate 221a. The first elastic member 231 may be disposed substantially in the inner space of the second structure 220, and may be located to correspond to the edge of the second plate 221a in the opened state (e.g., the state illustrated in FIG. 2). In an embodiment, the first elastic member 231 may move in the inner space of the second structure 220 according to the sliding movement of the first structure 210. When the first structure 210 moves from the closed state to the opened state, the first elastic member 231 may move toward the edge of the second plate 221a. When the first structure 210 reaches the opened state, the first elastic member 231 may contact the inner surface of the edge of the second plate 221a. For example, in the opened state, the first elastic member 231 may seal a gap between the inner surface of the edge of the second plate 221a and a surface of the display 250. In another embodiment, when moving from the closed state to the opened state, the first elastic member 231 may move while contacting the second plate 221a (e.g., sliding contact). For example, if a foreign material has been introduced into the gap between the second area A2 and the second plate 221a in the closed state, the first elastic member 231 may discharge the foreign material to the outside of the second structure 220, when moving to the opened state.

According to various embodiments, the second elastic member 233 may be attached to the inner surface of the edge of the second plate 221a and disposed substantially to face the inner surface of the display 250. **In** the closed state, the gap (e.g., arrangement gap) between the surface of the display 250 and the inner surface of the edge of the second plate 221a may be substantially determined by the second elastic member 233. According to an embodiment, the second elastic member 233 may contact the surface of the display 250 to substantially seal the arrangement gap, in the closed state. According to an embodiment, because the second elastic member 233 is made of a low-density elastic material such as sponge or a brush, it may not damage the surface of the display 250 even though it directly contacts the display 250. **In** another embodiment, as the first structure 210 gradually moves to the opened state, the arrangement gap may increase. For example, the display 250 may gradually expose the second area A2 to the outside of the second structure 220, substantially without contact with or rubbing against the second elastic member 233. When the first structure 210 reaches the opened state, the first elastic member 231 may contact the second elastic member 233. **In** the opened state, for example, the first elastic member 231 and the second elastic member 233 may seal the arrangement gap, thereby blocking introduction of a foreign material.

According to various embodiments, the electronic device 200 may further include guide rail(s) 237 and/or actuating member(s) 238. The guide rail(s) 237 may be mounted in the second structure 220, for example, on the third plate 221c and guide the sliding movement of the first structure 210 (e.g., the first plate 211 or the slide plate). The actuating member(s) 238 may include a spring or spring module that provides elastic force in a direction in which both ends thereof move away from each other. One end of the actuating member(s) 238 may be rotatably supported on the second structure 220, and the other end thereof may be rotatably supported on the first structure 210. When the first structure 210 slides, both ends of the actuating member(s) 238 may be located closest to each other at any one point (hereinafter, referred to as a 'closest point') between the closed state and the opened state. For example, the actuating member(s) 238 may provide elastic force to the first structure 210 in a movement direction toward the closed state in a section between the closest point and the closed state, and in a movement direction toward the opened state in a section between the closest point and the opened state.

In the following detailed description, the same reference numerals or no reference numerals are assigned to components that may be easily understood from the preceding embodiments, and detailed descriptions thereof may also be avoided. An electronic device (e.g., the electronic device 200 of FIGS. 1 to 3) according to various embodiments of the disclosure may be implemented by selectively combining the configurations of different embodiments, and the configuration of an embodiment may be replaced by that of another embodiment. For example, it is to be noted that the disclosure is not limited to specific drawings or embodiments.

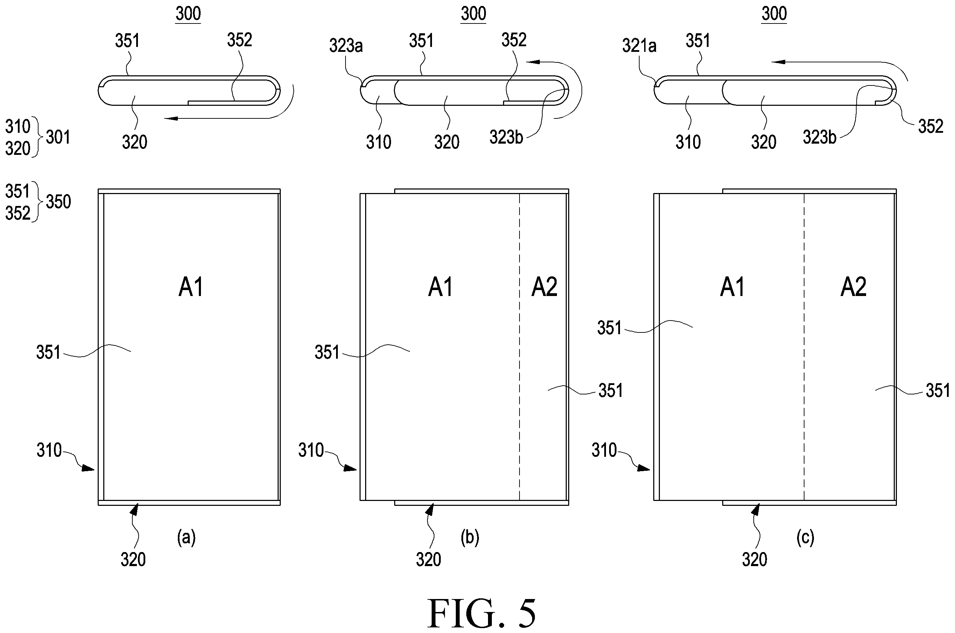

FIG. 5 is a diagram illustrating states of a display 350 in a slide-in operation and a slide-out operation of a first structure 310 according to various embodiments of the disclosure. FIG. 6a is a conceptual diagram illustrating a state in which the display 350 is partially lifted according to a certain embodiment. FIG. 6b is a conceptual diagram illustrating the display 350 including a dummy area A4 according to various embodiments of the disclosure.

According to various embodiments of the disclosure, an electronic device 300 (e.g., the electronic device 101 of FIG. 1 or the electronic device 200 of FIGS. 2 to 4) includes a housing 301 including a first surface, a second surface facing in an opposite direction to the first surface, a first side surface surrounding at least part of a space between the first surface and the second surface, and a second side surface facing in an opposite direction to the first side surface. As at least part of the housing 301 slides, for example the first structure 310 of the housing 301 in relation to the second structure 320 of the housing 301, a distance between the first side surface and the second side surface is changed. The first surface and the second surface may be defined by the first structure 310. For example, the first surface may be defined by a first plate 311 (or a first front plate; as shown in Figs. 9A to 11B) of the first structure 310, and the second surface may be defined by a fourth plate (or a first rear plate) of the first structure 310. According to another embodiment, the first surface and/or the second surface may be defined by the first structure 310, or additionally or alternatively, by the second structure 320. According to an embodiment, the first side surface may be defined by one side surface of the first structure 310 (e.g. a part of the housing 301 that is slid out), and the second side surface may be defined by one side surface of the second structure 320.

With reference to FIG. 5, a plurality of parts (or a plurality of areas) of the display 350 according to various embodiments of the disclosure will be described.

The display 350 (e.g., the display 250 of FIGS. 2 to 4) includes a first portion 351 and a second portion 352. The first portion 351 and the second portion 352 are separated for convenience of description, not functionally or physically. According to another embodiment, the display 350 includes the first area A1 and the second area A2. It should be noted that the first area A1 and the second area A2 are also separated for convenience of description, not necessarily functionally or physically. According to various embodiments of the disclosure, parts of a display referred to as 'a first portion and a second portion' or 'a first area and a second area' may be substantially the same or similar.

The display 350 includes the first portion 351 which is an area visible to the outside through at least one surface of the housing 301. Further, the display 350 includes the second portion 352 which is at least partially surrounded by the housing and thus not visible to the outside. When the first portion 351 is extended based on a slide-out operation of the first structure 310, the second portion 352 may be contracted. On the contrary, when the first portion 351 is contracted based on a slide-in operation of the first structure 310, the second portion 352 may be extended.

With the first structure 310 accommodated in the second structure, the display 350 includes the first area A1 as a basic use area and the second area A2 as an extension area based on sliding movement of the first structure 310.

The first area A1 is an area visible to the outside, when the first structure 310 is accommodated in the second structure 320 and thus the display is not extended. In a state in which the first structure 310 is accommodated in the second structure 320, the second area A2 is at least partially surrounded by the housing and thus not visible to the outside. When the first structure 310 is extracted from the second structure 320 by the slide-out operation, it is visible to the outside through at least one surface of the housing. In the slide-out operation of the first structure 310, the first area A1 and the second area A2 form the first portion 351 that is an area visible to the outside through the at least one surface of the housing.

According to various embodiments, given a maximum extendable length of the display 350 as 'Δl₂', when the display 350 moves by 'Δl₁' less than the maximum extendable length 'Δl₂', as much of the display 350 as an area of the second area A2 visible to the outside may be turned on, while as much of the display 350 as an area of the second area A2 invisible to the outside may be turned off, or touch input sensitivity may be adjusted. Therefore, current consumption of the electronic device 300 may be reduced, and touch misrecognition may be improved.

Referring to FIGS. 6a and 6b, the display 350 may include a third area A3. The third area A3 may be a part invisible to the outside, when the first structure 310 is accommodated in the second structure 320 or even when the first structure 310 is extracted from the second structure 320 by the slide-out operation. In the display 350, the third area A3 may be a part formed to have a predetermined curvature together with the second area A2.

According to an embodiment, the second area A2 and the third area A3 may surround at least part of a guide member 335 (e.g., the guide member 235 of FIG. 4). The second area A2 and the third area A3 may have a curved shape at a position corresponding to the guide member 335. The second area A2 and the third area A3 may be at least partially supported by a multi-joint hinge structure 314 (e.g., the multi-joint hinge structure 214 of FIG. 4).

According to various embodiments of the disclosure, the second area A2 and the third area A3 may be referred to as the 'alpha area α'. According to an embodiment, the alpha area α may move around the guide member 335 in a clockwise or counterclockwise direction, while being supported by the multi-joint hinge structure 314.

According to an embodiment, a section in which the alpha area α moves in a curved shape around the guide member 335, while being supported by the multi-joint hinge structure 314 may be defined as a 'rolling section'. According to an embodiment, a section in which the alpha area α moves in a flat shape may be defined as a 'flat section'. It may be preferred that the alpha area α moves while maintaining a specific curvature in the 'rolling section', and moves on an imaginary line L parallel to the front or rear surface of the electronic device, while being kept in a flat shape in the 'flat section'.

According to a certain embodiment, when the alpha area α moves from the 'flat section' to the 'rolling section' or from the rolling section' to the 'flat section', the display 350 may experience repulsive force, as illustrated in FIG. 6a. The repulsive force may cause a phenomenon in which at least part of the alpha area α is physically lifted. The repulsive force may be attributed to various factors including the physical properties of the display 350, an environment (e.g., temperature) in which the electronic device 300 is placed, and a time during which the electronic device is left in the opened or closed state.

According to various embodiments of the disclosure, the display 350 includes a fourth area A4 as illustrated in FIG. 6b. Like the third area A3, the fourth area A4 is a part invisible to the outside, when the first structure 310 is accommodated in the second structure 320 or even when the first structure 310 is extracted from the second structure 320 by the slide-out operation. According to an embodiment, the fourth area A4 may be substantially the same as the third area A3 of the display 350. According to an embodiment, the fourth area A4 may be formed by extending the third area A3 disclosed in the embodiment illustrated in FIG. 6a a little longer. According to the embodiment covered by the claims, the fourth area A4 is a part without a component for displaying a screen (e.g., a display element layer including at least one pixel and/or a TFT layer connected to the display element layer), unlike the third area A3.

According to various embodiments of the disclosure, the fourth area A4 is referred to as a 'dummy area'. According to an embodiment, as the dummy area is additionally included in the display 350, part (e.g., the alpha area α) of the display 350 may move in a flat shape on an imaginary line (e.g., L in FIG. 6a) parallel to the front or rear surface of the electronic device, without being lifted.

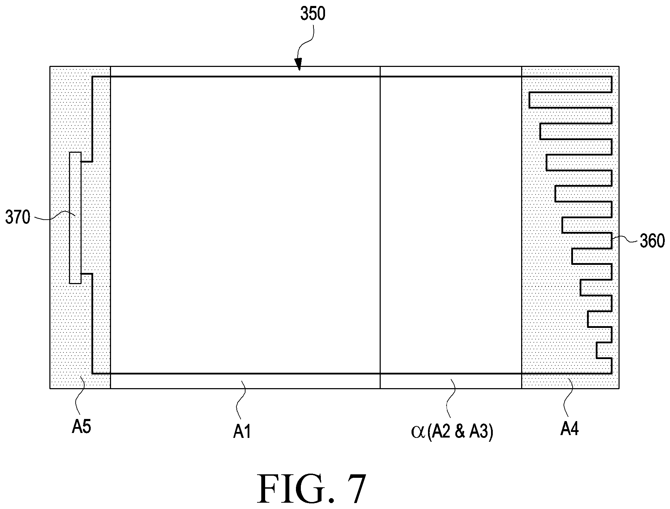

FIG. 7 is a diagram illustrating the display 350 with a strain gauge wired therein according to various embodiments of the disclosure.

According to various embodiments of the disclosure, at least one sensor capable of measuring a resistance change is provided in the dummy area A4 of the display 350. According to an embodiment, the at least one sensor is embedded in the dummy area A4 of the display 350. The at least one sensor capable of measuring a resistance change corresponds to a strain gauge 360. When the display 350 includes a plurality of layers, the strain gauge 360 is wired. For example, the strain gauge 360 may be provided in the form of a transmission line or strip line (e.g., microstrip line) in at least one of the plurality of layers included in the display 350. According to an embodiment not covered by the claims, the strain gauge 360 may be disposed between pixels of a pixel layer of the display 350 or over or under the pixel layer. The use of the strain gauge 360 provides a means for measuring a resistance change without increasing the size or volume of the display 350.

According to various embodiments, the strain gauge 360 may be connected to a circuit for sensing a resistance change in the strain gauge 360.

According to an embodiment, the strain gauge 360 may be connected to a display driver IC (DDI) 370 for controlling the display 350. The DDI may be a means that receives, for example, image data or image information including an image control signal corresponding to a command for controlling the image data, communicates with a touch circuit or a sensor module, and stores at least part of the received image information in memory. In addition, the DDI may pre-process or post-process (e.g., adjust a resolution, a brightness, or a size) at least part of the image data, and generate a voltage value or current value corresponding to the pre-processed or post-processed image data. Visual information (e.g., text, an image, or an icon) corresponding to the image data may be displayed through the display 350 by driving pixels of the display 350 through the generated voltage or current value. The DDI may detect a resistance change of the strain gauge 360. The DDI may provide information about the detected resistance change to a processor (e.g., the processor 120 of FIG. 1).

According to another embodiment, the strain gauge 360 may be connected to a control circuit (not shown) provided separately from the DDI. The control circuit (not shown) may detect the resistance change of the strain gauge 360 and provide the information about the detected resistance change to the processor (e.g., the processor 120 of FIG. 1). The control circuit may be included as part of the display 350 or as part of another component (e.g., the auxiliary processor 123 of FIG. 1) disposed outside the display 350.

According to various embodiments, the display 350 includes the first area A1, the alpha area α, and the dummy area A4 in which the strain gauge 360 is wired. Referring to FIG. 7, the display 350 may further include a second dummy area A5 on one side of the first area A1. The second dummy area A5, which is an area corresponding to a bezel of the electronic device (e.g., the electronic device 300 of FIG. 5), may be an unused area in which a screen is not displayed. According to an embodiment, the DDI 370 (or the control circuit) may be disposed in the second dummy area A5, and thus the strain gauge 360 disposed in the dummy area A4 may be extended to the second dummy area A5 and connected to the DDI 370 (or the control circuit).

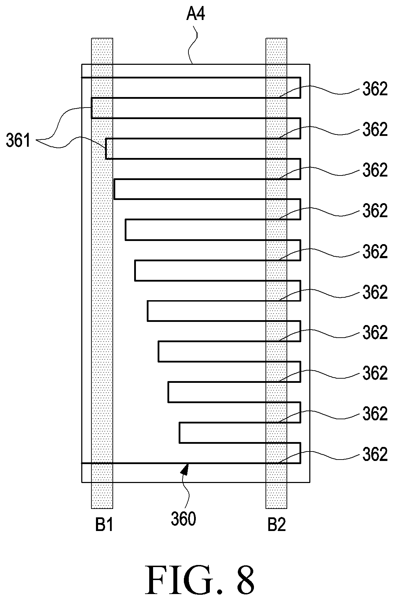

FIG. 8 is a diagram illustrating the dummy area A4 of the display illustrated in FIG. 7.

According to various embodiments of the disclosure, the strain gauge 360 is formed in the dummy area A4 of the display 350 in the form of an integrated wiring rather than in the form of an array. The 'array' may mean the strain gauge divided into a plurality of pieces, and the 'integrated wiring' may mean one extended wiring without division of the strain gauge.

According to various embodiments, the strain gauge 360 may be formed to be an integrated wiring and disposed in a zigzag shape, when the dummy area A4 is viewed from above. A wiring density within a limited mounting space of the dummy area A4 may be increased by forming the strain gauge 360 in the dummy area A4 and disposing it in a zigzag shape.

According to various embodiments, the strain gage 360 may have a shape with different wiring densities on one side and the other side of the dummy area A4. According to an embodiment, the strain gauge 360 may be wired to have an asymmetrical pattern in the dummy area A4. For example, the strain gauge 360 may be formed such that the wiring density is relatively low on one side B1 of the dummy area A4 and relatively high on the other side B2 of the dummy area A4, as illustrated in FIG. 8. The 'one side B1' of the dummy area A4 may be a part adjacent to the alpha area α of the display, and 'the other side B2' of the dummy area A4 may be a part located in an opposite direction to the part adjacent to the alpha area α of the display. As illustrated in FIG. 8, a small number of wires 361 of the strain gauge 360 overlap on the one side B1 of the dummy area A4, and a large number of wires 362 of the strain gauge 360 overlap on the other side B2 of the dummy area A4. According to this, a resistance variation ΔR_{b} measured on the other side B2 of the dummy area A4 may be much greater than a resistance variation ΔRₐ measured on the one side B1 of the dummy area A4. As such, the wiring density of the strain gauge 360 is different on the one side and the other side of the dummy area A4, which may enable easier detection of a resistance change during extension or contraction of the display 350.

The wiring shape of the strain gauge may vary according to embodiments. For example, unlike FIG. 8, the strain gauge 360 may be formed to have a relatively high wiring density on the one side B1 of the dummy area A4 and a relatively low wiring density on the other side B2 of the dummy area A4.

Hereinafter, various embodiments of measuring a resistance change in an electronic device will be described with reference to embodiments of FIGS. 9a to 11b.

FIG. 9a is a diagram illustrating an internal cross-section of the electronic device 300 in the slide-in state according to an embodiment of the disclosure. FIG. 9b is a diagram illustrating an internal cross-section of the electronic device 300 in the slide-out state according to an embodiment of the disclosure.

Referring to FIGS. 9a and 9b, an electronic device (e.g., the electronic device 300 of FIG. 5) includes the display 350 and may include the first plate 311, a multi-joint hinge structure (e.g., the multi-joint hinge structure 314 of FIG. 4) including a plurality of rods 315, the guide member 335, and various electronic components 342 (e.g., a camera, a battery, and so on) included in the electronic device, a support member 341, and/or a substrate 343.

The display 350 may include a display panel which is at least partially bendable and a window member 355 forming the exterior of the display. The display panel may include a display element layer including at least one pixel and a TFT layer connected to the display element layer. According to various embodiments, the display panel may correspond to an LCD panel, an LED panel, or an AMOLED panel, and display various images according to various operation states of the electronic device 101, 200, 300, or 400, application execution, and content. The display 350 according to various embodiments of the disclosure may refer to the display panel. At least part of the window member 355 may be made of a substantially transparent material. For example, it may be formed of a glass plate or polymer plate including various coating layers. According to an embodiment, the display panel may be exposed through a significant portion of the window member.

In an exemplary method of measuring a resistance change using a strain gauge (e.g., the strain gauge 360 of FIG. 7), the electronic device 300 may be formed such that the dummy area A4 with the strain gauge wired therein surrounds at least part of the guide member 335 in the slide-in or slide-out state of the electronic device, as illustrated in FIGS. 9a and 9b. When it is said that the dummy area A4 with the strain gauge wired therein surrounds at least part of the guide member 335, this may mean that the dummy area A4 has a curved shape at a position corresponding to the guide member 335. According to an embodiment, as the dummy area A4 is bent to have a curved shape, the strain gauge wired in the dummy area A4 may be deformed. In the embodiment of FIGS. 9a and 9b, the dummy area A4 may be supported by the multi-joint hinge structure (e.g., the multi-joint hinge structure 314 of FIG. 6a) including the plurality of rods 315. When the dummy area A4 is disposed at the position corresponding to the guide member 335, some of the plurality of rods 315 included in the multi-joint hinge structure may also be disposed at the position corresponding to the guide member 335. Among the plurality of rods 315, the rods disposed at the position corresponding to the guide member 335 may be arranged closer to each other than when the plurality of rods are adj acent to each other in a flat state. For example, referring to FIGS. 9a and 9b, when the cross-sections of the plurality of rods have trapezoidal shapes, the plurality of rods disposed at the position corresponding to the guide member 335 may be driven with their trapezoidal inclined surfaces facing each other. The dummy area A4 including the strain gauge may be located at a flat part (a flat portion) or at a bent part (a curved portion) which is the position corresponding to the guide member 335 according to the slide-in or slide-out state, as illustrated in FIGS. 9a and 9b. When the dummy area A4 is located on the bent part (the curved portion), the strain gauge may be deformed due to the bending. A resistance change may be detected by detecting the deformation of the strain gauge.

According to various embodiments of the disclosure, as described above with reference to FIGS. 9a and 9b, the dummy area A4 with the strain gauge wired therein may be disposed adjacent to the guide member 335, and a resistance change is detected using the wiring shape of the strain gauge in the dummy area A4.

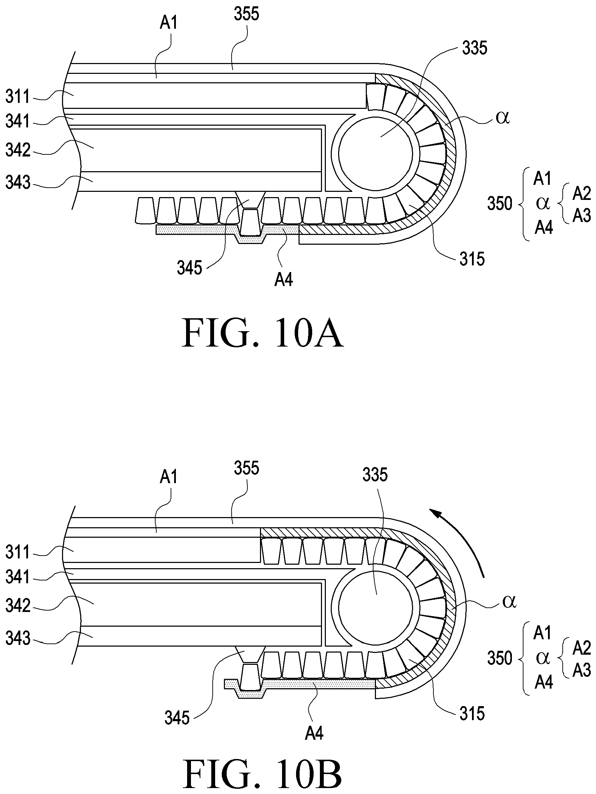

FIG. 10a is a diagram illustrating an internal cross-section of the electronic device 300 in the slide-in state according to another embodiment of the disclosure. FIG. 10b is a diagram illustrating an internal cross-section of the electronic device 300 in the slide-out state according to another embodiment of the disclosure.

In another exemplary method of measuring a resistance change using a strain gauge (e.g., the strain gauge 360 of FIG. 7), the electronic device 300 includes a structure 345 for changing resistance in the dummy area A4 with the strain gauge wired therein, as illustrated in FIGS. 10a and 10b. The structure 345 may protrude to a predetermined height from the support member 341 or the substrate 343 toward the dummy area, and have a bump shape.

In the embodiment of FIGS. 10a and 10b, the dummy area A4 may also be supported by a multi-joint hinge structure (e.g., the multi-joint hinge structure 314 of FIG. 6A) including a plurality of rods 315.

According to an embodiment, when the dummy area A4 moves in the slide-in or slide-out state of the electronic device, the structure 345 may press at least one rod 315 of the multi-joint hinge structure (e.g., the multi-joint hinge structure 314 of FIG. 6a) in a direction perpendicular to a movement direction of the dummy area A4. As a result, deformation may occur in the strain gauge wired in the dummy area A4. A resistance change may be detected by detecting the deformation of the strain gauge.

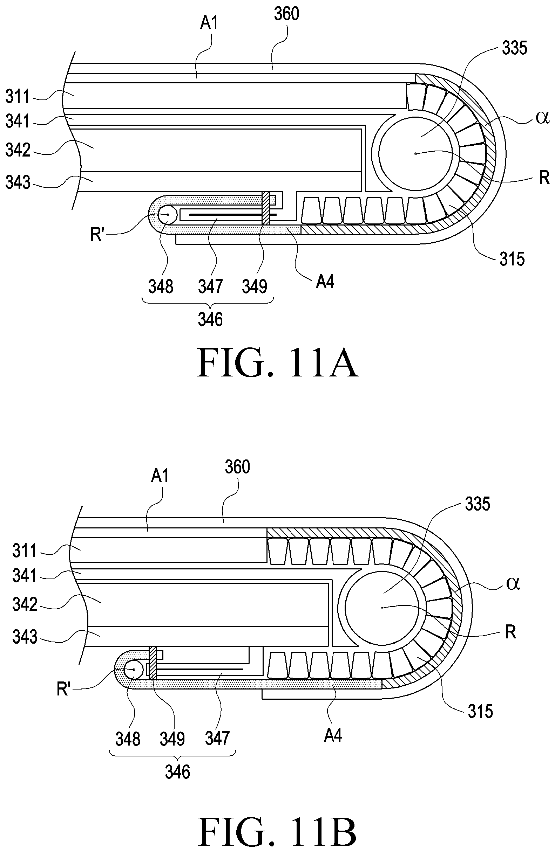

FIG. 11a is a diagram illustrating an internal cross-section of the electronic device 300 in the slide-in state according to another embodiment of the disclosure. FIG. 11b is a diagram illustrating an internal cross-section of the electronic device 300 in the slide-out state according to another embodiment of the disclosure.

In another exemplary method of measuring a resistance change using a strain gauge (e.g., the strain gauge 360 of FIG. 7), the electronic device 300 includes a structure 346 for changing resistance in the dummy area A4 with the strain gauge wired therein, as illustrated in FIGS. 11a and 11b. The structure 346 may protrude to a predetermined height from the support member 341 or the substrate 343 toward the dummy area, and have a rail shape.

The dummy area A4 may be supported by a multi-joint hinge structure (e.g., the multi-joint hinge structure 314 of FIG. 6a) including a plurality of rods 315. According to an embodiment, the structure 346 may be disposed substantially on the same plane as at least part of the multi-joint hinge structure (e.g., the multi-joint hinge structure 314 of FIG. 6a). According to an embodiment, the structure 346 may include a rod-shaped guide portion 347 that linearly guides at least part of the dummy area A4 in one direction, a rotation guide portion 348 that guides the at least part of the dummy area A4 to move in the clockwise or counterclockwise direction, while maintaining a specific curvature, and a fastening end portion 349 fixed to one end of the dummy area A4.

According to an embodiment, when the dummy area A4 moves in the slide-in or slide-out state of the electronic device, the dummy area A4 may be bent to have a specific curvature at a part corresponding to the rotation guide portion 348 of the structure 346. According to an embodiment, the rotation guide portion 348 (e.g., a second roller) may have a smaller diameter than that of the guide member 335 (e.g., a first roller). According to another embodiment, the radius of curvature of the dummy area A4 at a position corresponding to a center R' of the rotation guide portion 348 (e.g., the second roller) may be less than the radius of curvature of the alpha area α at a position corresponding to a center R of the guide member 335 (e.g., the first roller). As the dummy area A4 is bent near the rotation guide portion 348, the strain gauge wired in the dummy area A4 may be deformed. A resistance change may be detected by detecting the deformation of the strain gauge.

The strain gauge 360 may be connected to a control circuit (not shown) provided separately from the DDI. The control circuit (not shown) may detect a resistance change of the strain gauge 360 and provide information about the detected resistance change to a processor (e.g., the processor 120 of FIG. 1). The control circuit may be included as part of the display 350 or as part of another component (e.g., the auxiliary processor 123 of FIG. 1) disposed outside the display 350.

According to the various embodiments described above, since an extended or contracted length of a display is measured using a dummy area of the display, an insufficient mounting space in an electronic device may be effectively utilized. Further, the use of a strain gauge sensor that is wired in the dummy area of the display enables measurement of the extended or contracted length of the display without increasing the size of the electronic device.

According to various embodiments, which are not covered by the claims. the operation of measuring the extended or contracted length of the display using the dummy area of the display may also be applied to a rollable electronic device in the form of a scroll, in which a flexible display is extended by a specified distance from a housing or also to a rollable electronic device in the form of an appeal letter, in which a flexible display is extended from both ends of a housing in opposite directions with respect to each other.

An electronic device according to various embodiments of the disclosure is an electronic device in which a display is extendable, and may include a sliding-type rollable electronic device in which at least part of a display is movable linearly.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While specific embodiments have been described in the detailed description of the disclosure, it will be apparent to those skilled in the art that many modifications can be made without departing from the scope of the disclosure.

## Claims

1. An electronic device (101, 200, 300) including a flexible display (250, 350), comprising:
a housing (301) including a first surface (F1), a second surface (F2) facing in a direction opposite to the first surface (F1), a first side surface surrounding at least part of a space between the first surface (F1) and the second surface (F2), and a second side surface facing in a direction opposite to the first side surface, wherein a part (310) of the housing (301) is configured to perform a slide-in operation and a slide-out operation with respect to the housing (301), wherein the housing (301) is configured such that, when the part (310) of the housing (301) slides, a distance between the first side surface and the second side surface varies; and
a flexible display (250, 350) including a first portion (351) visible to an outside through at least one surface of the housing (301) and a second portion (352) extending from the first portion (351), wherein as at least a part of the second portion (352) is visible to the outside through the at least one surface of the housing (301) based on the part (310) of the housing (301) performing the slide-out operation, the first portion (351) is extendable,
wherein the second portion (352) of the flexible display (250, 350) includes a dummy area (A4) invisible to the outside independent on the housing performing a slide-in operation or a slide-out operation, in which a strain gauge is wired as a resistance measurement sensor, and
wherein the electronic device (101, 200, 300) is further comprising a structure (345, 346) configured to change resistance on the dummy area (A4) based on a sliding movement of the part (310) of the housing (301).

2. The electronic device (101, 200, 300) of claim 1, wherein the strain gauge includes an integrated wiring.

3. The electronic device (101, 200, 300) of claim 1 or claim 2, wherein the strain gauge is formed to be disposed in a zigzag shape in the dummy area (A4).

4. The electronic device (101, 200, 300) of any one of claims 1 to 3, wherein the strain gauge is formed to have asymmetric wiring densities on one side and the other side of the dummy area (A4).

5. The electronic device (101, 200, 300) of any one of claims 1 to 4, wherein the strain gauge is configured to be connected to a circuit unit disposed in a second dummy area (A5) included in the flexible display (250, 350).

6. The electronic device (101, 200, 300) of any one of claims 1 to 5, further comprising a support member (341) or a substrate (343) disposed in a space of the housing (301),
wherein the structure (345, 346) is configured to protrude from the support member (341) or the substrate (343) toward the dummy area (A4).

7. The electronic device (101, 200, 300) of any one of claims 1 to 6, further comprising:
a multi-joint hinge structure (214, 314) configured to support the flexible display (250, 350); and
a guide member (335) configured to guide the flexible display (250, 350) to move in a clockwise or counterclockwise direction while maintaining a specific curvature.

8. The electronic device (101, 200, 300) of claim 7, wherein the structure (345, 346) is configured to deform the dummy area (A4) in a direction perpendicular to a movement direction of the dummy area (A4) by pressing at least part of the multi-joint hinge structure (214, 314) in an opening operation or closing operation of the electronic device (101, 200, 300).

9. The electronic device (101, 200, 300) of claim 7 or claim 8, wherein the dummy area (A4) is formed to extend to a position corresponding to the guide member (335) and to be bendable.

10. The electronic device (101, 200, 300) of claim 6 , wherein the structure (345, 346) has a bump shape.

11. The electronic device (101, 200, 300) of any one of claims 1 to 9, wherein the structure (345, 346) has a rail shape.

12. The electronic device (101, 200, 300) of any one of claims 1 to 5, 7, or 9, wherein the structure (345, 346) includes:
a rod-shaped guide portion (347) configured to linearly guide at least a part of the dummy area (A4) in one direction;
a rotation guide portion (348) configured to guide the at least part of the dummy area (A4) to move in the clockwise or counterclockwise direction while maintaining a specific curvature; and
a fastening end portion (349) fixed to one end of the dummy area (A4).

13. The electronic device (101, 200, 300) of claim 12, wherein a diameter of the rotation guide portion (348) is less than a diameter of the guide member (335).

14. The electronic device (101, 200, 300) of claim 12 or claim 13, wherein a radius of curvature of the dummy area (A4) at a position corresponding to a center of the rotation guide portion (348) is less than a radius of curvature of the display (250, 350) at a position corresponding to a center of the guide member (335).

## Patentansprüche

1. Elektronische Vorrichtung (101, 200, 300), die eine flexible Anzeige (250, 350) enthält, Folgendes umfassend:
ein Gehäuse (301), das eine erste Fläche (F1), eine zweite Fläche (F2), die einer der ersten Fläche (F1) entgegengesetzten Richtung zugewandt ist, eine erste Seitenfläche, die zumindest einen Teil eines Raums zwischen der ersten Fläche (F1) und der zweiten Fläche (F2) umgibt, und eine zweite Seitenfläche, die einer der ersten Seitenfläche entgegengesetzten Richtung zugewandt ist, umfasst, wobei ein Teil (310) des Gehäuses (301) konfiguriert ist, um einen Einschiebevorgang und einen Herausschiebevorgang in Bezug auf das Gehäuse (301) durchzuführen, wobei das Gehäuse (301) so konfiguriert ist, dass, wenn der Teil (310) des Gehäuses (301) gleitet, ein Abstand zwischen der ersten Seitenfläche und der zweiten Seitenfläche variiert; und
eine flexible Anzeige (250, 350), die einen ersten Abschnitt (351), der für eine Außenseite durch mindestens eine Fläche des Gehäuses (301) sichtbar ist, und einen zweiten Abschnitt (352) umfasst, der sich von dem ersten Abschnitt (351) erstreckt, wobei, da mindestens ein Teil des zweiten Abschnitts (352) für die Außenseite durch die mindestens eine Fläche des Gehäuses (301) basierend auf dem Teil (310) des Gehäuses (301), der den Herausschiebevorgang durchführt, sichtbar ist, der erste Abschnitt (351) ausziehbar ist,
wobei der zweite Abschnitt (352) der flexiblen Anzeige (250, 350) einen von außen unsichtbaren Dummy-Bereich (A4) umfasst, der unabhängig vom Gehäuse einen Einschiebevorgang oder einen Herausschiebevorgang durchführt, in dem ein Dehnungsmessstreifen als Widerstandsmesssensor verdrahtet ist, und
wobei die elektronische Vorrichtung (101, 200, 300) ferner eine Struktur (345, 346) umfasst, die so konfiguriert ist, dass sie den Widerstand auf dem Dummy-Bereich (A4) basierend auf einer Gleitbewegung des Teils (310) des Gehäuses (301) ändert.

2. Elektronische Vorrichtung (101, 200, 300) nach Anspruch 1, wobei der Dehnungsmessstreifen eine integrierte Verdrahtung aufweist.

3. Elektronische Vorrichtung (101, 200, 300) nach Anspruch 1 oder 2, wobei der Dehnungsmessstreifen so ausgebildet ist, dass er zickzackförmig in dem Dummy-Bereich (A4) angeordnet ist.

4. Elektronische Vorrichtung (101, 200, 300) nach einem der Ansprüche 1 bis 3, wobei der Dehnungsmessstreifen so ausgebildet ist, dass er asymmetrische Verdrahtungsdichten auf einer Seite und der anderen Seite des Dummy-Bereichs (A4) aufweist.

5. Elektronische Vorrichtung (101, 200, 300) nach einem der Ansprüche 1 bis 4, wobei der Dehnungsmessstreifen so konfiguriert ist, dass er mit einer Schaltungseinheit verbunden ist, die in einem zweiten Dummy-Bereich (A5) angeordnet ist, der in der flexiblen Anzeige (250, 350) enthalten ist.

6. Elektronische Vorrichtung (101, 200, 300) nach einem der Ansprüche 1 bis 5, ferner umfassend ein Trägerelement (341) oder ein Substrat (343), das in einem Raum des Gehäuses (301) angeordnet ist,
wobei die Struktur (345, 346) so konfiguriert ist, dass sie von dem Trägerelement (341) oder dem Substrat (343) in Richtung des Dummy-Bereichs (A4) vorsteht.

7. Elektronische Vorrichtung (101, 200, 300) nach einem der Ansprüche 1 bis 6, ferner umfassend:
eine mehrgelenkige Scharnierstruktur (214, 314), die konfiguriert ist, um die flexible Anzeige (250, 350) zu unterstützen; und
ein Führungselement (335), das so konfiguriert ist, dass es die flexible Anzeige (250, 350) so führt, dass sie sich im oder gegen den Uhrzeigersinn bewegt und dabei eine spezifische Krümmung beibehält.

8. Elektronische Vorrichtung (101, 200, 300) nach Anspruch 7, wobei die Struktur (345, 346) so konfiguriert ist, dass sie den Dummy-Bereich (A4) in einer Richtung senkrecht zu einer Bewegungsrichtung des Blindbereichs (A4) verformt, indem sie mindestens einen Teil der mehrgelenkigen Scharnierstruktur (214, 314) bei einem Öffnungsvorgang oder Schließvorgang der elektronischen Vorrichtung (101, 200, 300) drückt.

9. Elektronische Vorrichtung (101, 200, 300) nach Anspruch 7 oder 8, wobei der Dummy-Bereich (A4) so ausgebildet ist, dass er sich bis zu einer Position erstreckt, die dem Führungselement (335) entspricht, und biegbar ist.

10. Elektronische Vorrichtung (101, 200, 300) nach Anspruch 6, wobei die Struktur (345, 346) eine Höckerform aufweist.

11. Elektronische Vorrichtung (101, 200, 300) nach einem der Ansprüche 1 bis 9, wobei die Struktur (345, 346) eine Schienenform aufweist.

12. Elektronische Vorrichtung (101, 200, 300) nach einem der Ansprüche 1 bis 5, 7 oder 9, wobei die Struktur (345, 346) Folgendes umfasst:
einen stabförmigen Führungsabschnitt (347), der so konfiguriert ist, dass er zumindest einen Teil des Dummy-Bereichs (A4) in einer Richtung linear führt;
einen Rotationsführungsabschnitt (348), der so konfiguriert ist, dass er zumindest einen Teil des Dummy-Bereichs (A4) so führt, dass er sich im oder gegen den Uhrzeigersinn bewegt und dabei eine spezifische Krümmung beibehält; und
einen Befestigungsendabschnitt (349), der an einem Ende des Dummy-Bereichs (A4) befestigt ist.

13. Elektronische Vorrichtung (101, 200, 300) nach Anspruch 12, wobei ein Durchmesser des Rotationsführungsabschnitts (348) kleiner als ein Durchmesser des Führungselements (335) ist.

14. Elektronische Vorrichtung (101, 200, 300) nach Anspruch 12 oder Anspruch 13, wobei ein Krümmungsradius des Dummy-Bereichs (A4) an einer Position, die einem Zentrum des Rotationsführungsabschnitts (348) entspricht, kleiner ist als ein Krümmungsradius der Anzeige (250, 350) an einer Position, die einem Zentrum des Führungselements (335) entspricht.

## Revendications

1. Dispositif électronique (101, 200, 300) comprenant un affichage flexible (250, 350), comprenant :
un boîtier (301) comprenant une première surface (F1), une seconde surface (F2) faisant face dans une direction opposée à la première surface (F1), une première surface latérale entourant au moins une partie d'un espace entre la première surface (F1) et la seconde surface (F2), et une seconde surface latérale faisant face dans une direction opposée à la première surface latérale, une partie (310) du boîtier (301) étant configurée pour effectuer une opération de glissement à l'intérieur et une opération de glissement à l'extérieur par rapport au boîtier (301), le boîtier (301) étant configuré de telle sorte que, lorsque la partie (310) du boîtier (301) glisse, une distance entre la première surface latérale et la seconde surface latérale varie ; et
un affichage flexible (250, 350) comprenant une première partie (351) visible à l'extérieur à travers au moins une surface du boîtier (301) et une seconde partie (352) s'étendant à partir de la première partie (351), dans laquelle, comme au moins une partie du boîtier (301) est visible à l'extérieur à travers au moins une surface du boîtier (301) sur la base de la partie (310) du boîtier effectuant l'opération de glissement à l'extérieur, la première partie (351) est extensible,
dans lequel la seconde partie (352) de l'affichage flexible (250, 350) comprend une zone factice (A4) invisible à l'extérieur, indépendante du boîtier effectuant une opération de glissement à l'intérieur ou une opération de glissement à l'extérieur, dans laquelle une jauge de contrainte est câblée en tant que capteur de mesure de résistance, et
dans lequel le dispositif électronique (101, 200, 300) comprend en outre une structure (345, 346) configurée pour changer la résistance sur la zone factice (A4) en se basant sur un mouvement de glissement de la partie (310) du boîtier (301).

2. Dispositif électronique (101, 200, 300) de la revendication 1, dans lequel la jauge de contrainte comprend un câblage intégré.

3. Dispositif électronique (101, 200, 300) de la revendication 1 ou de la revendication 2, dans lequel la jauge de contrainte est formée pour être disposée en zigzag dans la zone factice (A4).

4. Dispositif électronique (101, 200, 300) de l'une quelconque des revendications 1 à 3, dans lequel la jauge de contrainte est formée pour avoir des densités de câblage asymétriques d'un côté et de l'autre côté de la zone factice (A4).

5. Dispositif électronique (101, 200, 300) de l'une quelconque des revendications 1 à 4, dans lequel la jauge de contrainte est configurée pour être connectée à une unité de circuit disposée dans une seconde zone factice (A5) incluse dans l'affichage flexible (250, 350).

6. Dispositif électronique (101, 200, 300) de l'une quelconque des revendications 1 à 5, comprenant en outre un élément de support (341) ou un substrat (343) disposé dans un espace du boîtier (301),
dans lequel la structure (345, 346) est configurée pour faire saillie à partir de l'élément de support (341) ou du substrat (343) vers la zone factice (A4).

7. Dispositif électronique (101, 200, 300) de l'une quelconque des revendications 1 à 6, comprenant en outre :
une structure de charnière à articulations multiples (214, 314) configurée pour prendre en charge l'affichage flexible (250, 350) ; et
un élément de guidage (335) configuré pour guider l'affichage flexible (250, 350) afin qu'il se déplace dans le sens des aiguilles d'une montre ou dans le sens inverse des aiguilles d'une montre tout en conservant une courbure spécifique.

8. Dispositif électronique (101, 200, 300) de la revendication 7, dans lequel la structure (345, 346) est configurée pour déformer la zone factice (A4) dans une direction perpendiculaire à une direction de mouvement de la zone factice (A4) en pressant au moins une partie de la structure de charnière à articulations multiples (214, 314) dans une opération d'ouverture ou une opération de fermeture du dispositif électronique (101, 200, 300).

9. Dispositif électronique (101, 200, 300) de la revendication 7 ou de la revendication 8, dans lequel la zone factice (A4) est formée pour s'étendre jusqu'à une position correspondant à l'élément de guidage (335) et pour être pliable.

10. Dispositif électronique (101, 200, 300) de la revendication 6, dans lequel la structure (345, 346) a une forme de bosse.

11. Dispositif électronique (101, 200, 300) de l'une quelconque des revendications 1 à 9, dans lequel la structure (345, 346) a une forme de rail.

12. Dispositif électronique (101, 200, 300) de l'une quelconque des revendications 1 à 5, 7 ou 9, dans lequel la structure (345, 346) comprend :
une partie de guidage (347) en forme de tige configurée pour guider linéairement au moins une partie de la zone factice (A4) dans une direction ;
une partie de guidage de rotation (348) configurée pour guider l'au moins une partie de la zone factice (A4) afin qu'elle se déplace dans le sens des aiguilles d'une montre ou dans le sens inverse des aiguilles d'une montre tout en conservant une courbure spécifique ; et
une partie terminale de fixation (349) fixée à une extrémité de la zone factice (A4).

13. Dispositif électronique (101, 200, 300) de la revendication 12, dans lequel un diamètre de la partie de guidage de rotation (348) est inférieur à un diamètre de l'élément de guidage (335).

14. Dispositif électronique (101, 200, 300) de la revendication 12 ou de la revendication 13, dans lequel un rayon de courbure de la zone factice (A4) à une position correspondant à un centre de la partie de guidage de rotation (348) est inférieur à un rayon de courbure de l'affichage (250, 350) à une position correspondant à un centre de la partie de guidage de rotation (335).
